# EUROPEAN PATENT APPLICATION

(11) **EP 2 680 102 A2**
(43) Date of publication of application: **01.01.2014**
(21) Application number: 12180746.5
(22) Date of filing: 16.08.2012
(51) Int. Cl.: G06F 1/18, H05K 7/00

(54) **Fastening device for hard disk drive**

(30) Priority: 25.06.2012 CN 201210210098
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Peng, Wen-Tang, Tu-Cheng, New Taipei (TW); Zhou, Hai-Chen, Shenzhen City, Guangdong Province (CN)
(74) Representative: Gray, John James

(57) **Abstract**

A fastening device for two hard disk drives (HDDs) includes a tray, two brackets, and an engaging member. A first side plate of the tray defines a first slide slot extending forward, and a second slide slot extending backward. The brackets are respectively fastened to the HDDs. One of the brackets includes a first protrusion slidably received in the first slide slot, and the other bracket includes a second protrusion slidably received in the second slide slot. A first end of the engaging member is rotatably mounted to two end plates of the brackets facing each other, a second end of the engaging member is detachably mounted to the end paltes.

## Description

### BackGround

### Technical Field

The present disclosure relates to a device for fastening hard disk drives (HDDs).

### Description of Related Art

In a server, when an HDD tray carries two or more HDDs, a fastening structure is provided for each HDD. The fastening structures of the HDDs can be complex and occupy a large space.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, all the views are schematic, and like reference numerals designate corresponding parts throughout the several views.

FIG. 1 is an exploded, isometric view of an exemplary embodiment of a fastening device together with two hard disk drives, wherein the fastening device includes an engaging member.

FIG. 2 is an enlarged view of the engaging member of FIG. 1.

FIG. 3 is an assembled, isometric view of FIG. 1.

FIG.4 is a sectional view taken along the line IV-IV of FIG. 3.

### DETAILED DESCRIPTION

The disclosure, including the accompanying drawings, is illustrated by way of example and not by way of limitation. It should be noted that references to "an" or "one" embodiment in this disclosure are not necessarily to the same embodiment, and such references mean at least one.

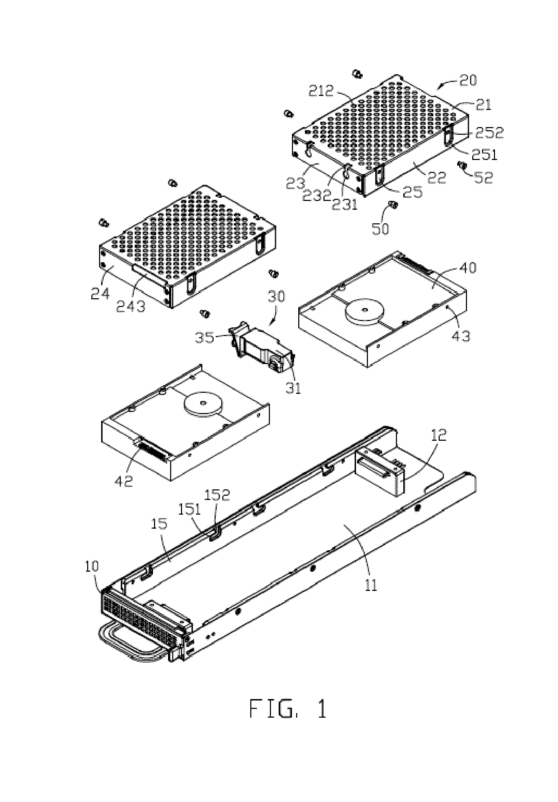

FIG. 1 shows an exemplary embodiment of a fastening device for fastening two hard disk drives (HDDs) 40. Two locking holes 43 are defined in each of opposite sides of each HDD 40. The fastening device includes a tray 10, two brackets 20, an engaging member 30, and a plurality of screws 50 with columnar heads 52.

The tray 10 includes a long bottom plate 11 and two opposite side plates 15 perpendicularly extending up from opposite sides of the bottom plate 11. Two connectors 12 are respectively mounted on a front end and a rear end of the bottom plate 11. A first group of slide slots 151 is defined in front portions of inner sides of the side plates 15, extending forward. A second group of slide slots 151 is defined in rear portions of the inner sides of the side plates 15, extending backward. The side plates 15 define a plurality of accesses 152 respectively communicating with rear ends of the slide slots 151 of the first group in a substantially perpendicular manner and extending through tops of the inner sides of the side plates 15. The side plates 15 define a plurality of accesses 152 respectively communicating with front ends of the slide slots 151 of the second group in a substantially perpendicular manner and extending through tops of the inner sides of the side plates 15. In the embodiment, each group of slide slots 151 has four slide slots 151.

Each bracket 20 includes a top plate 21, two side plates 22 perpendicularly extending down from opposite sides of the top plate 21, and a first end plate 23 and a second end plate 24 perpendicularly extending down from opposite ends of the top plate 21. The top plate 21 defines a plurality of vents 212 for heat dissipation of the HDD 40. Two recesses 25 are depressed inward from each side plate 22. A through hole 252 is defined in a bottom wall 251 of each recess 25. Two through holes 231 are defined in the first end plate 23. Two notches 232 are defined in a junction of the top plate 21 and the first end plate 23, and respectively communicate with top ends of the through holes 231. An opening 243 is defined in a junction of the top plate 21 and the second end plate 24.

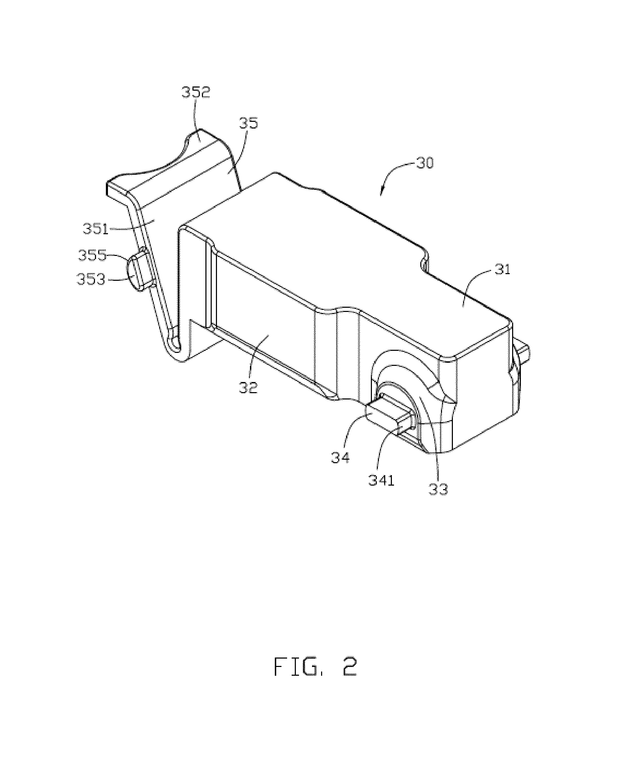

FIG. 2 shows the engaging member 30 including a main body 31 and a resilient portion 35. The main body 31 is hollow, without a bottom wall. Two abutting portions 32 extend out from opposite sides of the main body 31. Two platforms 33 extend from opposite sides of a first end of the main body 31. A substantially rectangular block 34 perpendicularly extends from each platform 33. Opposite end walls 341 of the block 34 are arc-shaped, and the radius of the arc is substantially the same as the radius of the through hole 231. The resilient portion 35 includes an extension plate 351 extending down firstly and then slantingly extending up from a bottom of a second end of the main body 31 opposite to the first end of the main body 31, an operation portion 352 extending from a top of the extension plate 351 away from the main body 31, and two latches 353 formed on opposite sides of the extension plate 351. An arc-shaped abutting wall 355 substantially having the same radius as the through hole 231 is formed on a side of each latch 353 away from the main body 31.

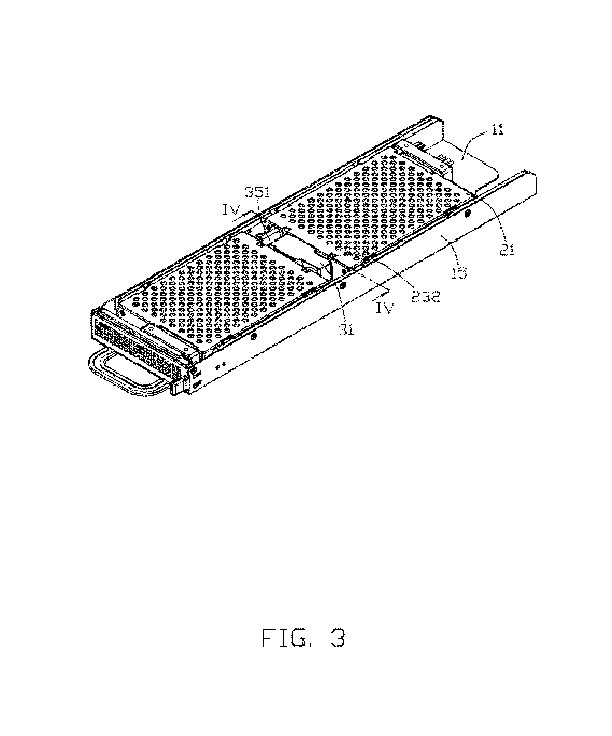

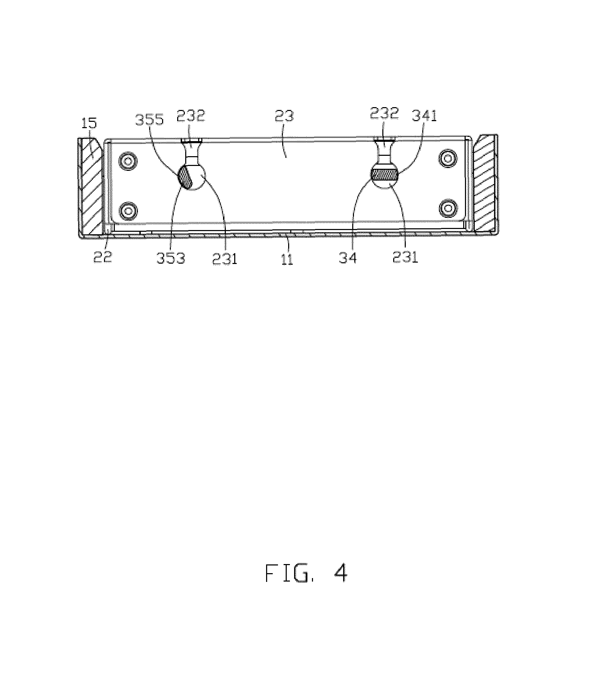

FIGS. 3 and 4 show in assembly, the HDDs 40 are respectively received in the brackets 20. The opposite sides of each HDD 40 abut against the bottom walls 251 of the corresponding bracket 20. A connector 42 of each HDD 40 aligns with the opening 243 of the corresponding bracket 20. The screws 50 respectively extend through the through holes 252 and engage in the locking holes 43. The brackets 20 are manipulated down toward the bottom plate 11, with the first end plates 23 facing each other. The heads 52 of the screws 50 enter the first and second groups of slide slots 151 through the corresponding accesses 152. The brackets 20 are respectively manipulated forward and backward, to allow the heads 52 of the screws 50 to slide in the first and second groups of slide slots 151, until the heads 52 of the screws 50 are blocked by blind ends of the first and second groups of slide slots 151. The connectors 42 of the HDDs 40 are respectively connected to the connectors 12 in the tray 10 through the openings 243.

The engaging member 30 is placed between the first end plates 23 of the brackets 20, with the first end of the main body 31 located at a bottom of the engaging member 30. The engaging member 30 is manipulated down, allowing the blocks 34 respectively enter the through holes 231 through the notches 232 adjacent to one of the side plates 15. The engaging member 30 is rotated toward the other side plate 15. The blocks 34 are rotated in the corresponding through holes 231, with the end walls 341 of the blocks 34 abutting against sidewalls bounding the corresponding through holes 231. The operation portion 352 is operated to deform the resilient portion 35 toward the main body 31, to allow the latches 353 to respectively slide down in the notches 232 adjacent to said the other side plate 15. When the abutting walls 355 completely abut against sidewalls bounding the corresponding through holes 231, the resilient portion 35 is restored. The abutting portions 32 respectively abut against the first end plates 23. Therefore, the HDDs 40 are fastened to the tray 10.

Only an engaging member 30 is provided to engage with the two brackets 20 fastening the HDDs 40. The fastening structure of the HDDs 40 is simple, saving space.

Even though numerous characteristics and advantages of the embodiments have been set forth in the foregoing description, together with details of the structure and the functions of the embodiments, the disclosure is illustrative only, and changes may be made in details, especially in the matters of shape, size, and arrangement of parts within the principles of the embodiments to the full extent indicated by the broad general meaning of the terms in which the appended claims are expressed.

## Claims

1. A fastening device for two hard disk drives (HDDs), comprising:
a tray comprising a bottom plate to support both of the HDDs arranged face to face in a fore-and-aft direction;
two brackets respectively accommodating the HDDs, each bracket comprising a first end wall, the first end walls of the brackets facing each other; and
an engaging member comprising a first end rotatably mounted to first ends of the first end walls of the brackets, and a second end detachably mounted to second ends of the first end walls of the brackets.

2. The fastening device of claim 1, wherein the tray further comprises two first side plates extending up from opposite sides of the bottom plate, each first side plate defines a first slide slot extending forward and a second slide slot extending rearward, each bracket further comprises two second side plates extending from opposite ends of the corresponding one of the first end walls, a first protrusion extends out from each second side plate of a front one of the brackets, a second protrusion extends out from each second side plate of a rear one of the brackets, the first protrusion is slidably received in the first slide slot of a corresponding first side plate, the second protrusion is slidably received in the second slide slot of the corresponding first side plate.

3. The fastening device of claim 2, wherein the engaging member comprises a main body, a first end of the main body is rotatably mounted to the first end plates, a cantilevered extension plate slantingly extends up from a second end of the main body, and two latches are formed on opposite sides of the extension plate to detachably engage with the first end plates.

4. The fastening device of claim 3, wherein each bracket further comprises a top plate, each first end plate extends down from an end of the corresponding top plate, a first through hole is defined in each of the first end plates, the first through holes of the first end plates align with each other, two blocks are formed on opposite sides of the first end of the main body, to rotatably engage in the corresponding first through holes.

5. The fastening device of claim 4, wherein two platforms extend from opposite sides of the first end of the main body, the blocks extend from the corresponding platforms.

6. The fastening device of claim 4, wherein opposite end walls of each block are arc-shaped, a radius of each end wall is substantially the same as a radius of each first through hole.

7. The fastening device of claim 4, wherein junctions of the first end plates and the top plates respectively define a first notch, each first notch communicates with a top end of a corresponding one of the first through holes, the blocks enter the first through holes through the corresponding first notches.

8. The fastening device of claim 4, wherein each of the first end plates defines a second through hole, the second through holes align with each other, the latches are respectively engaged with the corresponding second through holes.

9. The fastening device of claim 8, wherein an arc-shaped abutting wall substantially having the same radius as each of the second through holes is formed on a side of each latch away from the main body, the abutting walls abut against the sidewalls bounding the corresponding second through holes.

10. The fastening device of claim 8, wherein junctions of the first end plates and the top plates respectively define a second notch, each second notch communicates with a top end of a corresponding one of the second through holes, the latches respectively slide down along sidewalls bounding the second notches to enter the second through holes.

11. The fastening device of claim 3, wherein two abutting portions extend from opposite sides of the main body to abut against the first end plates.

12. The fastening device of claim 3, wherein an operation portion extends from a top of the extension plate away from the main body.

13. The fastening device of claim 2, wherein the first and second of slide slots of each first side plate are respectively located at front and rear portions of the side plate, the first side plate defines a first access extending through a top of the first side plate and communicating with a rear end of the first slide slot, and a second access extending through the top of the first side plate and communicating with a front end of the second slide slot, the first protrusion enters the first slide slot through the first access, the second protrusion enters the second slide slot through the second access.

14. The fastening device of claim 13, wherein a plurality of recesses is depressed inward from the second side plates of the brackets, bottom walls of the recesses abut against the HDDs, the first and second protrusions are heads of first and second screws extending through the corresponding bottom walls and engaging in the HDDs.

15. The fastening device of claim 1, wherein two connectors are mounted on the bottom plate of the tray, respectively at front and rear ends of the tray, each bracket further comprises a second end wall opposite to the first end wall, the second end wall defines an opening aligning with the corresponding connector.
